# EUROPÄISCHE PATENTSCHRIFT

(11) **EP 0 605 069 B1**
(45) Veröffentlichungstag und Bekanntmachung des Hinweises auf die Patenterteilung: **13.01.1999**
(21) Anmeldenummer: 93250303.0
(22) Anmeldetag: 05.11.1993
(51) Int. Cl.: G01S 5/02, G01S 11/10, B61F 5/22, B61L 25/02, G08G 1/137

(54) **Verfahren und Einrichtung zum Ermitteln von Fahrdaten eines Schienenfahrzeugs**
Method and apparatus for measuring movement data of a rail vehicle
Procédé et dispositif de détermination des données de circulation d'un véhicule ferroviaire

(30) Priorität: 29.12.1992 DE 4244624
(43) Veröffentlichungstag der Anmeldung: 06.07.1994
(73) Patentinhaber: MANNESMANN Aktiengesellschaft, 40213 Düsseldorf (DE)
(72) Erfinder: Rasti, Mahmud Keschwari, D-30890 Barsinghausen (DE)
(74) Vertreter: Presting, Hans-Joachim, Dipl.-Ing.

(56) Entgegenhaltungen:
- WO-A-89/05255
- DE-C- 3 727 768
- US-A- 5 129 605

## Beschreibung

Es ist bekannt, über von Satelliten ausgesandte Meßimpulse eine Entfernungsbestimmung von Fahrzeugen, wie z.B. Schiffen, durchzuführen. Auf diese Weise ist es möglich, die Koordinaten des Orts auf dem Meer zu bestimmen, an dem sich ein Schiff befindet (Global-Positionierungssystem der Firma VDO).

Es ist andererseits bekannt, durch in Satelliten stationierten Meßinstrumente einen breiten Wellenlängenbereich hochempfindlich zu erfassen, indem zwei identische Horn-Antennen abwechselnd mit einem einzelnen Empfänger durch einen Umschalter verbunden werden und die Signale der beiden Hörner miteinander verglichen werden. Diese Vorgänge spielen sich jedoch an dem Satelliten selbst ab und nicht zwischen dem Satelliten und einem erdgebundenen Fahrzeug.

Im allgemeinen werden Satelliten zur Nachrichtenübertragung von einem Erdpunkt zu einem anderen Erdpunkt eingesetzt. Dementsprechend sind die erdgebundenen Einrichtungen stationär und senden über den Satelliten Signale an eine andere Erdstation. Demgegenüber ist es noch nicht üblich - abgesehen von einer Ortsbestimmung eines Fahrzeuges auf dem Meer - sich eines Himmelskörpers zu bedienen, um ein Fahrzeug in seinen Bewegungen zu steuern.

Ein System zur Positionsbestimmung für Schienenfahrzeuge ist aus der US-A-5 129 605 bekannt.

Der im Anspruch 1 bzw. im Anspruch 5 angegebenen Erfindung liegt das Problem zugrunde, für die Bewegungen eines Schienenfahrzeugs eine automatische Fernsteuerung zu schaffen.

Die mit der Erfindung erzielten Vorteile bestehen insbesondere darin, daß Schienenfahrzeuge automatisch nicht nur in ihrer Geschwindigkeit, sondern auch zusätzlich in ihrer Kurvenneigung entsprechend der gefahrenen Geschwindigkeit am Anfang und am Ende der Kurve eingestellt werden können, ohne einen unangemessen hohen vorrichtungstechnischen Aufwand zu betreiben. Die hierbei notwendigwerdende Datenverarbeitung geschieht innerhalb des fahrenden Schienenfahrzeuges.

Hierbei ist es vorteilhaft, daß über ein System mit Dopplereffekt die aktuelle Geschwindigkeit des Schienenfahrzeugs berechnet wird.

Die Erfindung betrifft ferner eine Einrichtung für die Ermittlung von Fahrdaten eines Schienenfahrzeugs, wie z.B. Geschwindigkeit, Bremsstrecken, Gleitwerte und/oder Zentrifugalkräfte, bei einem vorgegebenen Streckenverlauf, unter Einsatz eines Mikrocomputers.

Die erfindungsgemäße Aufgabe wird vorrichtungsstechnisch dadurch gelöst, daß auf der Oberseite des Schienenfahrzeugs eine Antenne vorgesehen ist, an die ein Empfänger im Schienenfahrzeug für die Signalfolge eines Satelliten angeschlossen ist und daß die Satelliten-Signale in einem Gerät mit Dopplereffekt zum Berechnen der Geschwindikgeit verwertbar sind.

Ein Ausführungsbeispiel der Erfindung ist in der Zeichnung dargestellt und wird im folgenden näher beschrieben. Es zeigen
- Fig. 1: eine Gesamtübersicht mit einem Satelliten und mehreren Schienenfahrzeugarten und
- Fig. 2: ein Blockschaltbild der elektrischen Einrichtung im Schienenfahrzeug.

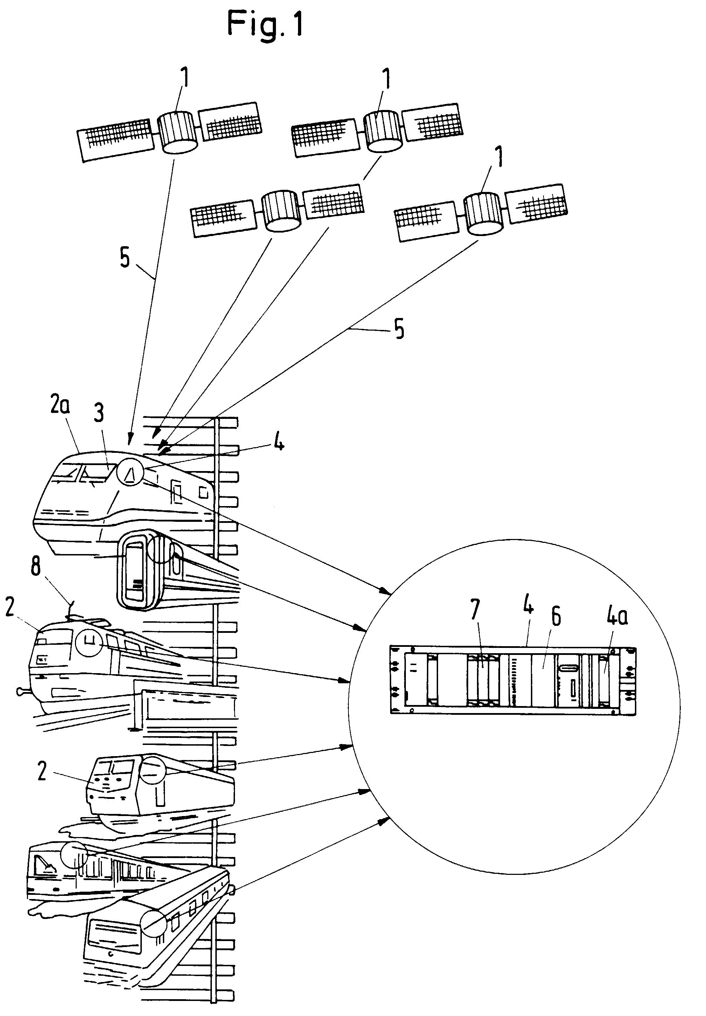

Das Verfahren zum Ermitteln der Fahrdaten eines Schienenfahrzeugs 2, wie z.B. zum Ermitteln der Fahrgeschwindigkeit, der Bremsstrecken, von Gleitwerten und/oder Zentrifugalkräften wird in der Art ausgeübt, daß von einem oder mehreren in Funkverbindung stehenden Satelliten 1 (Fig. 1) Signale 5 an einen auf dem Schienenfahrzeug 2 befindlichen Empfänger gesendet werden, wobei sich der Empfänger in einem Führerstand 3 befindet und daß diese Signale 5 zur Berechnung von Längen-, Zeit- oder Fliehkraftwerten in einem Mikrocomputer 6 eingegeben und verarbeitet werden. Aufgrund dieses Verfahrens kann sodann über die Signale 5 die aktuelle Position des Schienenfahrzeugs 2 berechnet werden. Außerdem besteht die Möglichkeit, über ein System mit einem Dopplereffekt die aktuelle Geschwindigkeit des Schienenfahrzeugs 2 im Mikrocomputer 6 zu berechnen.

Es ist weiterhin möglich, daß aufgrund der Signale 5 und eines Vergleichs zwischen einer in einem Speicher 7 abgespeicherten Streckenkarte die zu erwartende Fliehkraft am Beginn bzw. Ende einer Schienen-Kurve errechnet und davon abhängig die entsprechende Wagenneigung über einen Wagenneigungs-Antrieb eingestellt wird.

In jedem Schienenfahrzeug 2 befindet sich eine Einrichtung für die Ermittlung der Fahrdaten des Schienenfahrzeugs, wie z.B. der Geschwindigkeit, von Bremsstrecken, von Gleitwerten und/oder von Zentrifugalkräften, wobei der vorgegebene Streckenverlauf in dem Speicher 7 abgelegt ist. Der Speicher 7 für die Streckenkarte kann sonach mit dem Mikrocomputer 6 kombiniert sein.

Auf einer Oberseite 2a des Schienenfahrzeugs 2 ist weiterhin eine Antenne 8 vorgesehen, an die der Empfänger 4 im Schienenfahrzeug 2 für die Signalfolge eines Satelliten 1 angeschlossen ist, wobei die Satelliten-Signale 5 in einem Gerät mit Dopplereffekt zum Berechnen der Geschwindigkeit verwertbar sind. Aufgrund eines Vergleichs einer vorgegebenen über den Mikrocomputer 6 und einen Speicher 7 abgespeicherten Streckenkarte mit der Positionserkennung durch die Satelliten-Signale 5 ist die aktuelle Position des Schienenfahrzeugs bestimmbar.

Es ist weiter vorgesehen, daß zwecks Fliehkraftausgleichs aufgrund der errechneten Position und der Werte für die Geschwindigkeit ein Stellsignal an eine Steuereinrichtung 4a für die Betätigung eines Stellgliedes zur Einstellung der Schienenfahrzeug-Neigung erzeugbar ist.

Die gesamte Einrichtung besteht neben dem Mikrocomputer 6 und der Antenne 8 aus einem Empfangsteil 9, der die Satelliten-Signale 5 empfängt und weiterhin aus einem Umformer 10, in dem die Satelliten-Signale 5 in Informationen einer lesbaren Form umgewandelt werden. Außerdem ist an den Umformer 10 ein Modul 11 für die Geschwindigkeitsberechnung und ein Modul 12 für die Positionsberechnung angeschlossen.

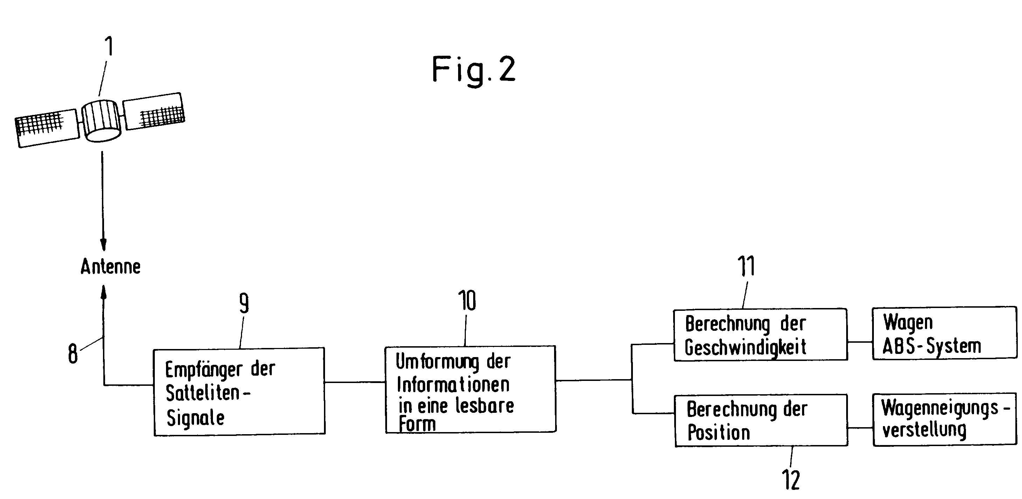

Der Modul 11 enthält außerdem Schaltkreise für ein Wagen-ABS-System, und an den Modul 12 ist eine Wagenneigungsverstellung (Fig. 2) angeschlossen, die entsprechend dem vorgegebenen Programm gesteuert wird.

### Bezugszeichenliste

- 1: Satellit
- 2: Schienenfahrzeug
- 2a: Oberseite
- 3: Führerstand
- 4: Empfänger
- 4a: Steuereinrichtung
- 5: Signale
- 6: Mikrocomputer
- 7: Speicher für Streckenkarte
- 8: Antenne
- 9: Empfangsteil
- 10: Umformer
- 11: Modul für Geschwindigkeitsberechnung
- 12: Modul für Positionsberechnung

## Patentansprüche

1. Verfahren zum Ermitteln der Fahrdaten eines Schienenfahrzeugs, wie beispielsweise Geschwindigkeit, Bremsstrecken und/oder Gleitwerte bei vorgegebenem Streckenverlauf, wobei von einem oder mehreren in Funkverbindung miteinander stehenden Satelliten (1) Signale (5) an einen auf einem Schienenfahrzeug (2) befindlichen Empfänger (4) gesendet werden und diese Signale (5) zur Berechnung von längen- und zeitabhängigen Werten in einen Mikrocomputer (6) eingegeben und verarbeitet werden,
dadurch gekennzeichnet,
daß aufgrund der über die Signale (5) errechneten Werte für die Position und die Geschwindigkeit und anhand eines Vergleiches dieser mit einer abgespeicherten Streckenkarte (7) die zu erwartende Fliehkraft am Beginn bzw. Ende einer Schienen-Kurve errechnet wird und davon abhängig die entsprechende Wageneigung über einen Wagenneigungsantrieb eingestellt wird.

2. Verfahren nach Anspruch 1,
dadurch gekennzeichnet,
daß unter Nutzung des Dopplereffektes die aktuelle Geschwindigkeit des Schienenfahrzeuges (2) berechnet wird.

3. Einrichtung für die Ermittlung von Fahrdaten eines Schienenfahrzeuges, wie z.B. Geschwindigkeit, Bremsstrecken und/oder Gleitwerte bei vorgegebenem Streckenverlauf, mit einem Mikrocomputer, wobei auf der Oberseite (2a) eines Schienenfahrzeuges (2) eine Antenne (8) vorgesehen ist, an die ein Empfänger (4) im Schienenfahrzeug (2) für die Signalfolge eines Satelliten angeschlossen ist,
dadurch gekennzeichnet,
daß zwecks Fliehkraftausgleich aufgrund der errechneten Position und der Werte für die Geschwindigkeit und anhand eines Vergleiches dieser mit einer abgespeicherten Streckenkarte (7) ein Stellsignal an eine Steuereinrichtung (4a) für die Betätigung eines Stellgliedes zur Einstellung der Neigung des Schienen fahrzeugs erzeugbar ist.

## Claims

1. A method for determining the travelling data of a rail vehicle, such as speed, braking distances and/or coefficients of sliding friction over a given distance, wherein signals (5) are sent to a receiver (4) located on a rail vehicle (2) from one or more satellites (1) in a radio connection with each other and these signals (5) are entered into a microcomputer (6) and processed in order to calculate length-dependent and time-dependent values,
characterised in that
the centrifugal force to be expected at the beginning or end of a rail curve is calculated on the basis of the values for the position and the speed which are calculated by means of the signals (5) and using a comparison thereof with a stored route map (7), and the corresponding carriage tilt is set dependent thereon by means of a carriage-tilting drive.

2. A method according to Claim 1, characterised in that the current speed of the rail vehicle (2) is calculated using the Doppler effect.

3. An apparatus for determining travelling data of a rail vehicle, such as speed, braking distances and/or coefficients of sliding friction over a given distance, with a microcomputer, with an antenna (8) being provided on the top side (2a) of a rail vehicle (2), to which antenna a receiver (4) in the rail vehicle (2) is connected for the signal sequence of a satellite,
characterised in that
for the purpose of compensating for centrifugal force on the basis of the calculated position and the values for the speed and using a comparison thereof with a stored route map (7), an adjustment signal can be produced at a control means (4a) for actuating an actuator for setting the tilt of the rail vehicle.

## Revendications

1. Procédé pour la détermination des données de circulation d'un véhicule ferroviaire, par exemple la vitesse, des distances de freinage et/ou des coefficients de frottement par glissement pour un parcours prescrit, dans lequel un ou plusieurs satellites (1) en contact radio envoient des signaux (5) à un récepteur (4) se trouvant dans un véhicule ferroviaire (2) et dans lequel ces signaux (5) sont entrés et traités dans un micro-ordinateur (6) pour le calcul de valeurs dépendantes de la longueur et du temps,
caractérisé en ce que, à partir des valeurs calculées par l'intermédiaire des signaux (5) pour la position et pour la vitesse et à l'aide d'une comparaison de ces valeurs à une carte de parcours mémorisée (7), on calcule la force centrifuge escomptée au début ou à la fin d'une courbe des rails et on règle en fonction du résultat et par l'intermédiaire d'un dispositif de commande d'inclinaison de caisse l'inclinaison de caisse appropriée.

2. Procédé selon la revendication 1,
caractérisé en ce qu'on calcule la vitesse actuelle du véhicule ferroviaire (2) en exploitant l'effet Doppler.

3. Dispositif pour la détermination de données de circulation d'un véhicule ferroviaire, par exemple la vitesse, des distances de freinage et/ou des coefficients de frottement par glissement pour un parcours prescrit, avec un micro-ordinateur, dans lequel il est prévu sur le dessus (2a) d'un véhicule ferroviaire (2) une antenne (8) à laquelle est raccordé un récepteur (4) dans le véhicule ferroviaire (2) pour la séquence de signaux d'un satellite,
caractérisé en ce que, en vue de la compensation de la force centrifuge, à partir de la position calculée et des valeurs de la vitesse et à l'aide d'une comparaison de ces valeurs à une carte de parcours mémorisée (7), un signal de réglage peut être produit pour un dispositif de commande (4a) en vue de l'actionnement d'un organe de réglage destiné à régler l'inclinaison du véhicule ferroviaire.
